# EUROPEAN PATENT APPLICATION

(11) **EP 1 661 764 A1**
(43) Date of publication of application: **31.05.2006**
(21) Application number: 04772852.2
(22) Date of filing: 31.08.2004
(51) Int. Cl.: B60R 16/02, B60R 11/02, G06F 3/033, G02B 27/02

(54) **INPUT DEVICE**

(30) Priority: 02.09.2003 JP 2003309916
(71) Applicant: MATSUSHITA ELECTRIC INDUSTRIAL CO., LTD., Kadoma-shi, Osaka 571-8501 (JP)
(72) Inventor: ITABASHI, Toshiyuki Matsushita Electric Ind. Co.,, Chuo-ku, Osaka-shi Osaka 540-6319 (JP); IWASAKI, Morio Matsushita Electric Ind. Co.,Ltd., Chuo-ku, Osaka-shi Osaka 540-6319 (JP); KOTANI, Satoru Matsushita Electric Ind. Co.,Ltd., Chuo-ku, Osaka-shi Osaka 540-6319 (JP); AKAHORI, Hiroshi Matsushita Electric Ind. Co.,Ltd., Chuo-ku, Osaka-shi Osaka 540-6319 (JP); NOMURA, Noboru Matsushita Electric Ind. Co.,Ltd., Chuo-ku, Osaka-shi Osaka 540-6319 (JP); ONO, Manabu Matsushita Electric Ind. Co.,Ltd., Chuo-ku, Osaka-shi Osaka 540-6319 (JP)
(74) Representative: Pautex Schneider, Nicole Véronique
(86) International application number: PCT/JP2004/012903
(87) International publication number: WO 2005/023598

(57) **Abstract**

The present invention provides an input device that enables a user to operate an electronic apparatus in an optimum position for the user. For this purpose, the input device of the present invention includes: a display unit in which images are displayed; an input detection unit that is disposed to be movable back and forth in front of the display unit and optically detects an operation position indicated for an operation screen displayed in the display unit; a control unit that outputs a control signal corresponding to the detected operation position; and an electric driving unit that moves the input detection unit back and forth. By changing the position of the input detection unit to an operation position suitable to a driver, the driver can operate the electronic apparatus in an optimum position for the driver.

## Description

### BACKGROUND OF THE INVENTION

### Field of the Invention

The present invention relates to an input device that is mounted in a vehicle or the like and detects an operation position indicated by a user' s fingertips or the like for input.

### Description of the Related Art

A vehicle is equipped with an electronic apparatus such as an audio device and a navigation device as aids for comfortable driving. Such an electronic apparatus, which may be operated when the vehicle is running, is devised for such easy operations as not to obstruct driving in such a case. For example, some electronic apparatuses are designed based on ergonomic data so that the positions and sizes of operation buttons and operation knobs are optimum. Some of other electronic apparatuses are devised so that a display to display images is stored in a dashboard so as not to obstruct driving when not used, and drawn from the dashboard only when used, thereby preventing an operation surface from being hidden by the display (e.g., Japanese Published Unexamined Patent Application No. 1.999-288227).

On the other hand, a virtual keyboard is known as technology for optically detecting an operation position by fingertips or the like. In the field of small-sized computers such as portable terminals, an attempt is made to miniaturize a keyboard used as an input device. Although devices themselves can be miniaturized to some extent thanks to recent technological innovation, there have been limitations in miniaturizing a keyboard used as an input device because of physical constraints of performing input operations by fingertips. Accordingly, a device is being developed which performs input by optically detecting operation positions of a virtually displayed keyboard that are indicated by fingertips (e.g., Japanese Published Unexamined Patent Application No. 2000-89899) .

However, an electronic apparatus mounted in a vehicle may not be disposed in an easy-to-operate position, depending on a driver's physical conditions such as the height and the arm length of the driver. Moreover, a relative distance between the electronic apparatus and an operator changes depending on the driver's seat position and driving posture, such as driving with a seat back raised or driving in a reclining state, with the result that operations may become difficult. On the other hand, for an input device employing the above-described virtual keyboard used as an input apparatus for a vehicle and the like, since the user does not need to directly touch an operation screen, the user can easily operate the input device, but there are many problems such as where the virtual keyboard should be displayed within the vehicle.

### SUMMARY OF THE INVENTION

The present invention has been made to solve the conventional problems as described above, and provides an input device that enables a user to operate an electronic apparatus in an optimum position for the user.

The input device of the present invention includes: a display unit in which images are displayed; an input detection unit that is disposed to be movable back and forth in front of the display unit and detects an operation position indicated for an operation screen displayed in the display unit; and a control unit that outputs a control signal corresponding to the detected operation position.

By this construction, when a user indicates a necessary option by, e.g., fingertips for an operation screen displayed in the display unit, the coordinates of its operation position are detected using infrared rays or ultrasonic beams by the input detection unit, and a control signal corresponding to the operation position is outputted from the control unit to control an electronic apparatus to which the input device is connected. The input detection unit can detect the operation position even if the user changes the position of the input detection unit, so that the user can operate the electronic apparatus in an optimum position for the user.

The input device of the present invention includes an electric driving unit that moves the input detection unit back and forth.

By this construction, the user can move the input detection unit to an optimum operation position corresponding to a user's seat position by the electric driving unit. The electric driving unit is constructed to move the input detection unit back and forth, e.g., by feed screws rotated by a motor, and the user can stop the input detection unit in a desired position.

The input device of the present invention is
characterized in that the control unit controls the display of the display unit according to the distance between the display unit and the input detection unit.

By this construction, when the input detection unit is moved away from the display unit, the control unit expands the operation screen in the display unit to display options in enlargement so that a command range by fingertips, that is, a detection range can be expanded to increase the user's operability.

The input device of the present invention is
characterized in that the control unit controls the distance between the display unit and the input detection unit according to the size of display in the display unit.

By this construction, when the number of options of the operation screen displayed in the display unit is small, or the size of the options is large, the distance between the display unit and the input detection unit can be increased. On the other hand, when the number of displayed options is large, or the size of the options is small, the distance between the display unit and the input detection unit can be reduced, thereby preventing incorrect operations by fingertips and easing input.

The input device of the present invention includes an image projection unit that projects images onto the display unit, and has a structure with the input detection unit and the image projection unit integrated.

By this construction, a necessary operation screen can be projected onto the display unit by the image projection unit. In this case, the display unit is a screen, and by integrating the image projection unit with the input detection unit, the input device can be constructed independently of the electronic apparatus body.

The input device of the present invention includes a projection control unit that controls the projection of the image projection unit according to a disposition angle of the display unit.

By this construction, when the angle of a display screen must be changed because of the constraints of places in which the input device is mounted, or a state of external light, images easy-to-view for the user can be displayed by changing the projection angle of images projected onto the display screen.

The input device of the present invention includes a detection control unit that controls a detection area of the input detection unit according to a disposition angle of the display unit.

By this construction, when the angle of a display screen must be changed, the detection position and the range of the input detection unit can be changed to be adaptable to an operation screen projected onto the display screen.

The input device of the present invention is
characterized in that the display unit is a windshield of a vehicle.

By this construction, the input device does not need to include an independent display unit and can display satisfactory operation images even for windshields having different inclinations for different vehicle models, so that a low-cost input device can be achieved.

The present invention is a vehicle including any one of the input devices described above.

By this construction, an electronic apparatus mounted in a vehicle can be easily operated according to the user's physical conditions and seat positions, and a comfortable vehicle causing less fatigue during driving can be achieved.

The present invention includes: a display unit in which images are displayed; an input detection unit that is disposed to be movable back and forth in front of the display unit and detects an operation position indicated for an operation screen displayed in the display unit; and a control unit that outputs a control signal corresponding to the detected operation position. This construction offers an excellent effect that, by changing the position of the input detection unit, a user can operate an electronic apparatus in an optimum position for the user.

The above-described objects and advantages of the present invention will be made more apparent by embodiments below described with reference to the accompanying drawings.

### BRIEF DESCRIPTION OF THE DRAWINGS

FIG. 1 is a functional block diagram of an input device in a first embodiment of the present invention;
FIGS. 2A and 2B are drawings for explaining the principle of an input detection unit in the first embodiment of the present invention;
FIG. 3 is a schematic block diagram including an electric driving unit in the first embodiment of the present invention;
FIG. 4 is a schematic diagram showing a vehicle interior view of the first embodiment of the present invention;
FIG. 5 is a flowchart for explaining the operation of an input device in the first embodiment of the present invention;
FIG. 6 is a functional block diagram of an input device in a second embodiment of the present invention;
FIGS. 7A, 7B, 7C, and 7D are schematic diagrams showing a vehicle interior view of the second embodiment of the present invention;
FIGS. 8A and 8B are schematic diagrams showing examples of angle change of an image projection unit and an input detection unit of the second embodiment of the present invention;
FIG. 9 is a schematic block diagram including an electric driving unit in the second embodiment of the present invention; and
FIG. 10 is a flowchart for explaining the operation of an input device in the second embodiment of the present invention.

### DETAILED DESCRIPTION OF THE PREFERRED EMBODIMENTS

Hereinafter, preferred embodiments of the present invention will be described in detail with reference to the accompanying drawings.

### (First Embodiment)

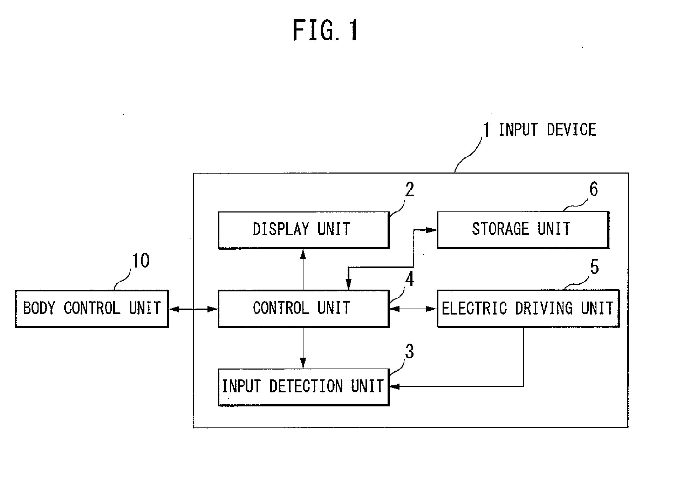

FIG. 1 shows the configuration of an input device in a first embodiment of the present invention. In FIG. 1, the input device 1 includes: a display unit 2 in which images are displayed; an input detection unit 3 that is disposed to be movable back and forth in front of the display unit 2 and optically detects an operation position indicated for an operation screen displayed in the display unit 2; a control unit 4 that outputs a control signal corresponding to the detected operation position; an electric driving unit 5 that moves the input detection unit 3 back and forth; and a storage unit 6 that stores operation programs and operation screen data in the control unit 4.

The display unit 2 employs liquid crystal, EL, CRT, and the like, and displays an operation screen with operation items displayed, according to image signals from the control unit 4. The operation screens vary from those that contain only on/off items to those that also contain ten-keys or a keyboard, depending on the electronic apparatus to be operated.

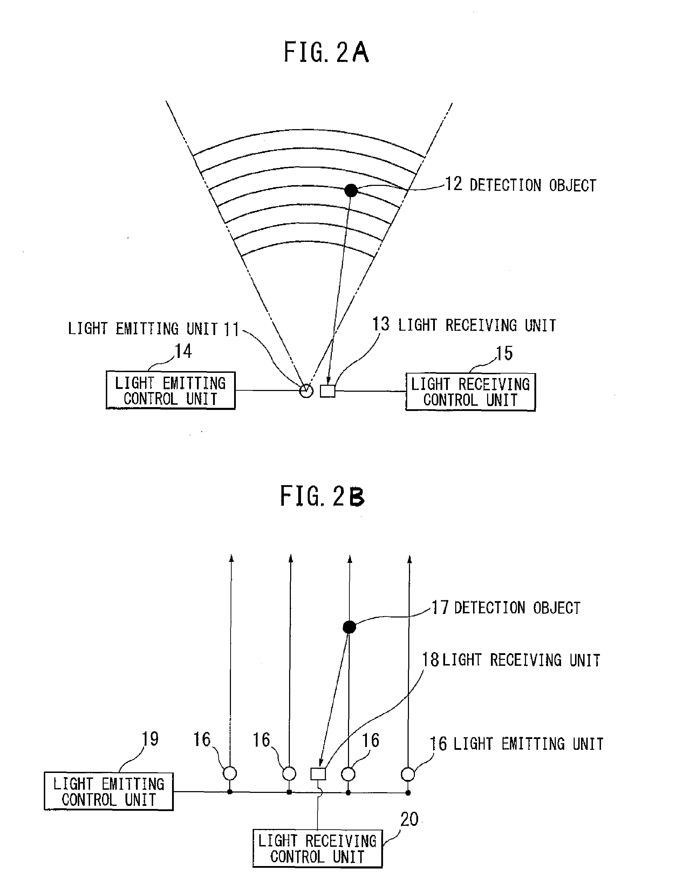

The input detection unit 3, as shown in FIG. 2A, vertically scans infrared laser beams from top to bottom and horizontally from the light emitting unit 11 to form a two-dimensional detection area, receives light reflected from a detection obj ect 12 such as fingertips entering the detection area in a light receiving unit 13, and optically detects the coordinate position of the detection object 12 by scanning timing of the infrared laser beams in the light emitting control unit 14 and light receiving timing of reflected light in the light receiving control unit 15. Instead of the infrared laser beam, ultrasonic beams may be used to measure a distance to a detection object and its direction and detect a coordinate position. As shown in FIG. 2B, when an operation screen displayed in the display unit 2 is a standard one, it is also possible that light emitting units 16 to emit infrared laser are respectively disposed in positions corresponding to options on the operation screen, and a light receiving unit 18 to receive reflected light from the detection object 17 is disposed at their central part, to detect the coordinate position of the detection object 17 by infrared emitting timing in the light emitting control unit 19 and light receiving timing of reflected light in the light receiving control unit 20. Otherwise a distance to the detection object may be detected by measuring the brightness of the detection object when infrared rays from the light emitting unit 16 hit the detection object, or by measuring time until the infrared rays are detected in the light receiving unit after they hit the detection object. Furthermore, it is also possible to use an optical touch panel. In the touch panel, a rectangular frame is disposed in front of the display unit 2; and photocouplers each including a light emitting element and a light receiving element are disposed in the each two opposite sides of the rectangular frame to optically detect a specified position interrupted by the detection object and determine an input position.

In FIG. 1, the control unit 4 is a microcomputer that outputs a control signal corresponding to an operation position optically detected by the input detection unit 3. The control unit 4 controls the display of the display unit 2 according to the distance between the display unit 2 and the input detection unit 3, controls the distance between the display unit 2 and the input detection unit 3 according to the size of display in the display unit 2, and controls the movement of the input detection unit 3 by the electric driving unit 5. Furthermore, the control unit 4 sends operation position signals detected by the input detection unit 3 to a body control unit 10 to control an electronic apparatus body, or switch an operation screen of the display unit 2.

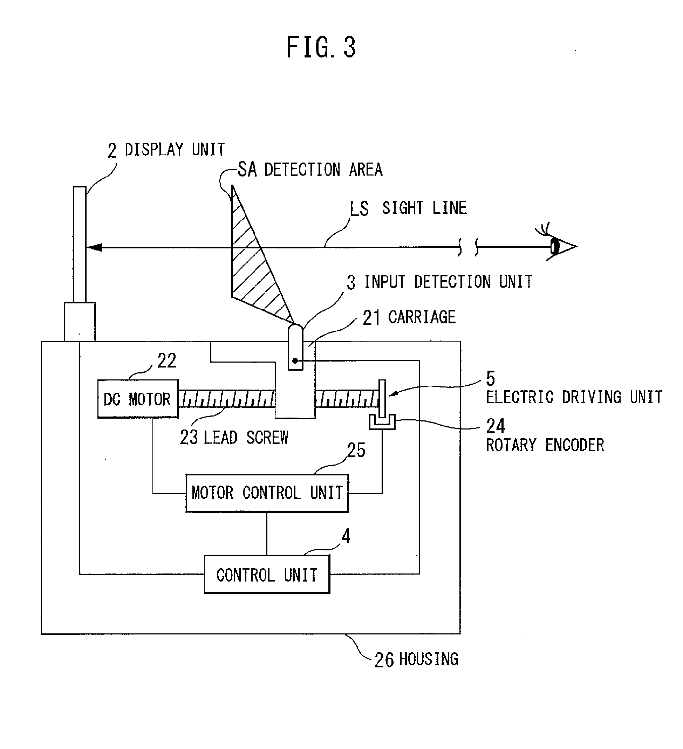

The electric driving unit 5, as shown in FIG. 3, linearly reciprocates a carriage 21 securing the input detection unit 3 by a lead screw 23 rotated by a DC motor 22. A rotating angle is detected by a rotary encoder 24 provided in one end of the lead screw 23, the signal is inputted to the motor control part 25, a movement quantity of the input detection unit 3 is detected, and the rotation of the DC motor 22 is controlled. A motor driving switch not shown in the drawing is connected to the motor control unit 25, and when a user presses the motor driving switch, the input detection unit 3 is moved to a user's desired position. The electric driving unit 5 is housed in a housing 26 of the input device 1, and a printed board on which the control unit 3 and the storage unit 6 are mounted is also housed in the housing 26.

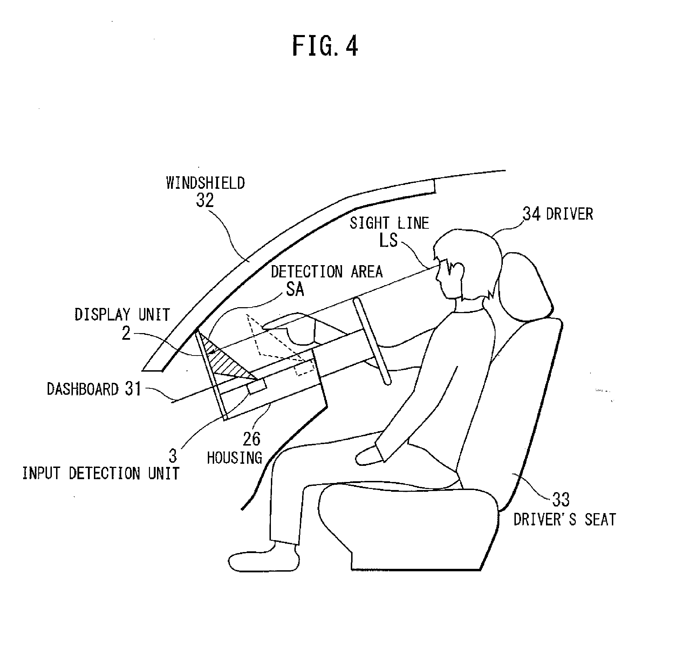

FIG. 4 shows an example of the input device 1 mounted in a vehicle. The housing 26 of the input device 1 is incorporated in the dashboard 31 of the vehicle so that the input detection unit 3 is exposed. In another embodiment, it may be mounted on the dashboard 31 after shipment. The display unit 2 is disposed beneath a windshield 32 at the depth of the dashboard 31. Since the direction of a sight line LS of a driver to sit on a driver's seat 33 is almost parallel to the movement direction of the input detection unit 3, even when a detection area SA of the input detection unit 3 moves, the operation screen of the display unit 2 can be viewed through the detection area SA.

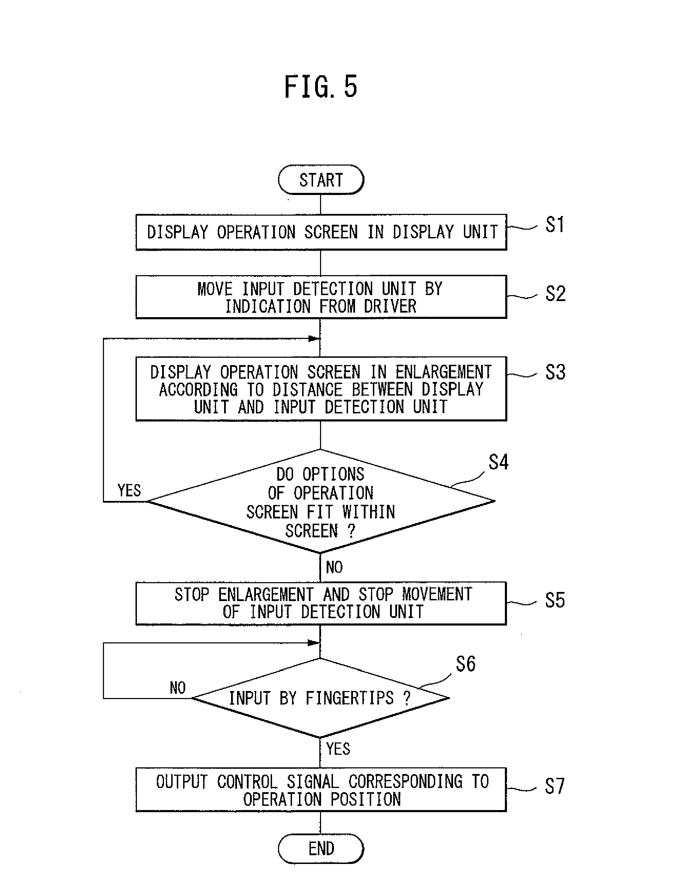

The following describes the operation of the input device 1 in the first embodiment of the present invention with reference to FIG. 5. In a description below, to simplify the description, the control of turning on and off an audio device mounted in the vehicle will be described. First, the power to the input device 1 is turned on to display an operation screen in the display unit 2 (Step S1). The power to the input device is turned on, for example, by turning an engine key of the vehicle to an accessory position. Next, when the driver presses the motor driving switch, the control unit 4 moves the input detection unit 3 as long as the motor driving switch is pressed (Step S2). The control unit 4 monitors a movement distance of the input detection unit 3 for the display unit 2, and displays the operation screen of the display unit 3 in enlargement according to the movement distance (Step S3) . For example, when the input detection unit 3 is moved away from the display unit 2, the control unit 4 expands the operation screen in the display unit 2 to display options in enlargement so that a command range by fingertips, that is, a detection range can be expanded to increase the user's operability. The control unit 4 monitors whether the expanded operation items within the operation screen fit within the screen (Step S4), and when the operation items are to move out of the screen, the control unit 4 stops the expansion and stops the input detection unit 3 at that position (Step S5) . For example, when the number of options of the operation screen displayed in the display unit 2 is small, or the size of the options is large, the distance between the display unit 2 and the input detection unit 3 can be increased. On the other hand, when the number of displayed options is large, or the size of the options is small, the distance between the display unit 2 and the input detection unit 3 can be reduced, thereby preventing incorrect operations by fingertips and easing input. Then, the control unit 4 monitors whether the driver's fingertips have entered the detection area SA of the input detection unit 3 (Step S6) . On detecting that the fingertips have entered the detection area SA, the control unit 4 notifies the driver of the fact by a beep, and further on recognizing an operation position by the fingertips, notifies the driver of the fact by a different beep. When an operation position have been determined, the control unit 4 outputs a control signal corresponding to the an operation position to the body control unit 10 (Step S7) , which turns on or off an audio device mounted in the vehicle according to the control signal.

As described above, according to the first embodiment of the present invention, the input device includes: the display unit 2 in which images are displayed; the input detection unit 3 that is disposed to be movable back and forth in front of the display unit 2 and detects an operation position indicated for an operation screen displayed in the display unit 2; the control unit 4 that outputs a control signal corresponding to the detected operation position; and the electric driving unit 5 that moves the input detection unit 3 back and forth. By this construction, by changing the position of the input detection unit 3 to an operation position suitable for the driver, the driver can operate the electronic apparatus in an optimum position for the driver.

In the first embodiment, as the display unit 2, the monitor of a navigation device mounted in the vehicle can be used. Since an operation screen such as a menu screen is displayed on the monitor of the navigation device, the driver inputs options while viewing the operation screen, and the input detection unit 3 sends the input operation position signal to the navigation device. By this construction, the driver can perform the same operations as with conventional monitors equipped with a touch panel. In this case, in the first embodiment, since the input detection unit 3 can be moved away from the monitor screen to place it near the operator, there is an advantage in that input operations are made much easier than with conventional monitors equipped with a touch panel.

### (Second Embodiment)

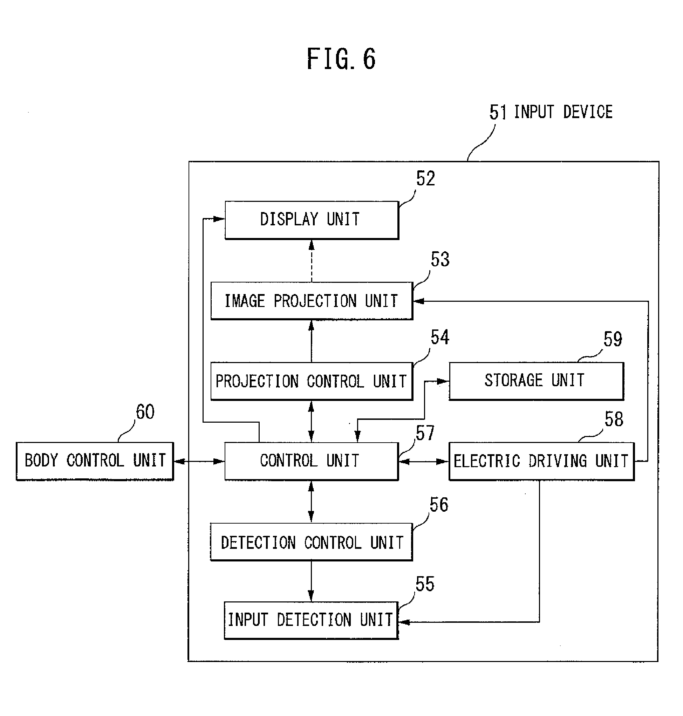

The following describes a second embodiment of the present invention. FIG. 6 shows the construction of an input device in a second embodiment of the present invention. In FIG. 6, the input device 51 includes: a display unit 52 serving as a screen on which images are displayed; an image projection unit 53 that projects an operation screen onto the display unit 52; a projection control unit 54 that controls the projection of the image projection unit 53 according to a disposition angle of the display unit 52; an input detection unit 55 that is disposed to be movable back and forth in front of the display unit 52 and detects an operation position indicated for an operation screen displayed in the display unit 52; a detection control unit 56 that controls a detection area of the input detection unit 55 according to a disposition angle of the display unit 52; a control unit 57 that outputs a control signal corresponding to a detected operation position; an electric driving unit 58 that integrally moves the image projection unit 53 and the input detection unit 55 back and forth; and a storage unit 59 that stores operating programs and operation screen data in the control unit 57. A body control unit 60 of an electronic apparatus body is connected to the control unit 57.

The display unit 52 uses a screen having a general white projection surface, and can use a projector that projects a real image onto the screen as the image projection unit 53. As a different construction, a semi-transparent reflector is used as the display unit 52, a head up display that projects a virtual image onto the semi-transparent reflector can be used in the image projection unit 53.

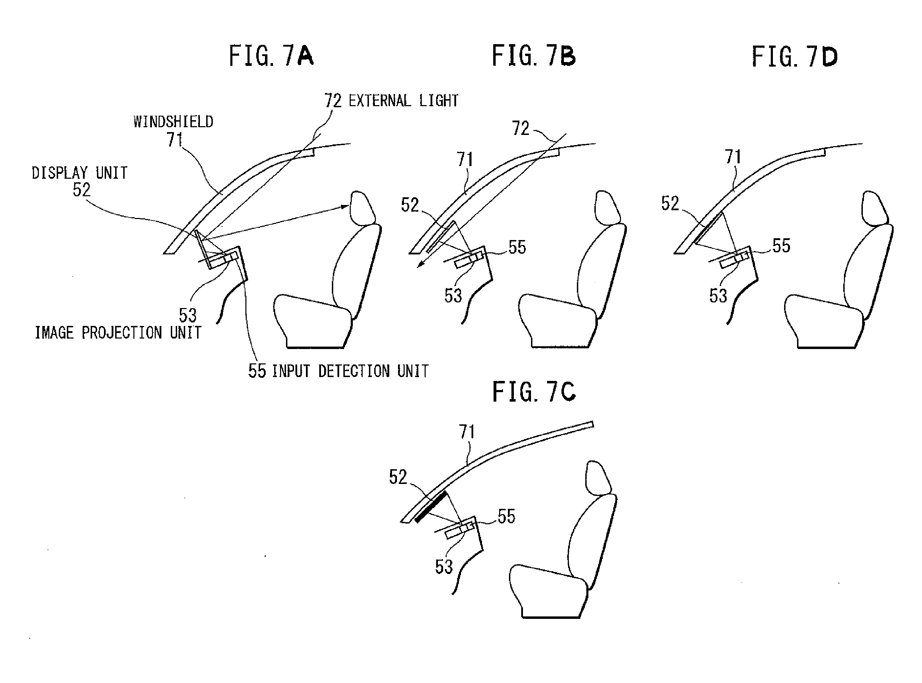

The projection control unit 54 controls the projection of the image projection unit 53 according to a disposition angle of the display unit 52. FIG. 7 shows examples of various dispositions of the display unit 52. FIG. 7A shows an example of the display unit 52 that is disposed to be almost vertical to a sight line direction and widen a view range with respect to the same display surface. FIG. 7B shows an example of the display unit 52 angled to prevent external light 72 coming via a windshield 71 from worsening display due to its reflection on the display unit 52. FIG. 7C shows an example of the display unit 52 disposed in line with the inclination of the windshield 71 to achieve space savings by reducing a space between the windshield 71 and the display unit 52. FIG. 7D shows an example of the display unit 52 formed to be displayable by sticking a white sheet or semi-transparent reflective sheet to the windshield 71 to achieve space savings and obtain a front view by using part of the windshield 71 as the display unit 52.

The projection control unit 54 includes driving units such as a tilt mechanism and a zoom mechanism for adjusting a projection direction and a focal distance of the image projection unit 53, and a software unit for correcting distortions. By this construction, according to the position and angle at which the display unit 52 is disposed, the input device 51 makes a less distorted display by changing the angle and focal distance of an image projected onto the display unit 52, and trapezoid corrections.

The detection control unit 56 includes a mechanism unit for changing beam irradiation directions for detection to change the position and range of the detection area SA of the input detection unit 55 according to the display position, and a software unit for finding a detection position.

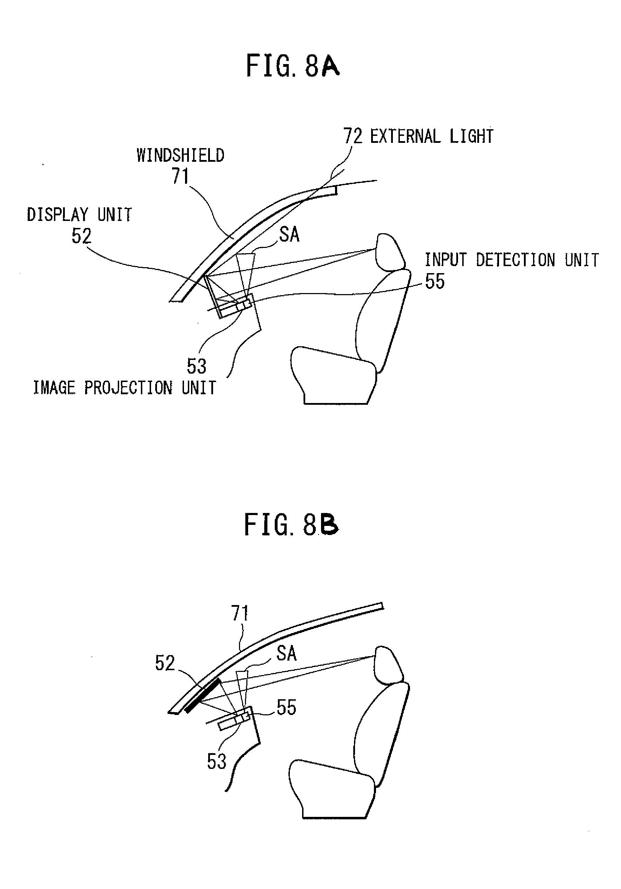

When the position and angle of the display unit 52 are changeable, and a position almost vertical to a sight line as shown in FIG. 8A is inclined as shown in FIG. 8B to prevent display from being worsened due to the external light 72, the detection area SA of the input display unit 55 may be changed upward by the detection control unit 56 because the sight line moves upward in the case of FIG. 8B.

The control unit 57, which is a microcomputer that outputs a control signal corresponding to an operation position detected by the input detection unit 55, controls the projection control unit 54 and the detection control unit 56. Moreover, the control unit 57 controls the display of the display unit 52 according to the distance between the display unit 52 and the input detection unit 55, controls the distance between the display unit 52 and the input detection unit 55 according to the size of display in the display unit 52, and controls the movement of the electric driving unit 58 of the united input device 51. Furthermore, an operation position signal detected by the input detection unit 55 is sent to a body control unit 60 to control an electronic apparatus body.

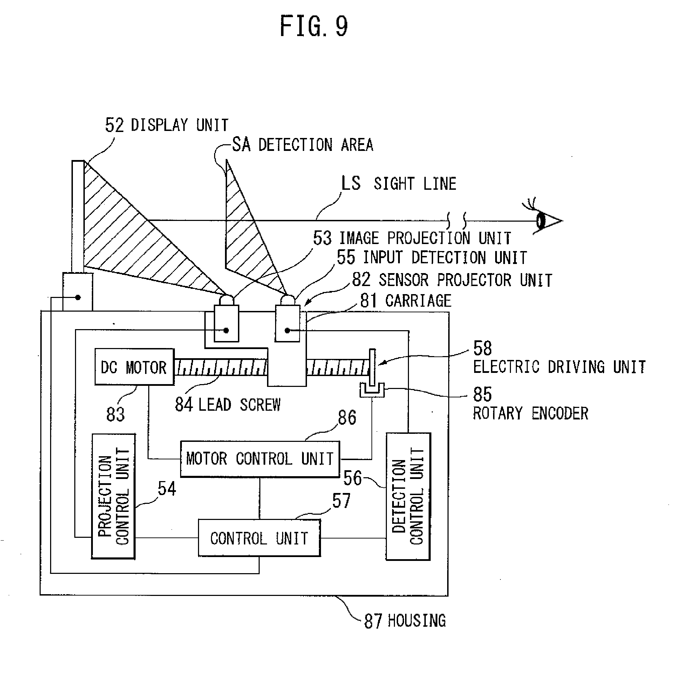

The electric driving unit 58 has the same construction as the electric driving unit 5 of the first embodiment, as shown in FIG. 9. The image projection unit 53 and the input detection unit 55 are integrally mounted in a carriage 81 to constitute a sensor projector unit 82. The carriage 81 is linearly reciprocated by a lead screw 84 rotated by a DC motor 83, and a rotating speed is detected by a encoder 85 provided in one end of the lead screw 84. The detected rotating speed signal is inputted to the motor control unit 86, a movement quantity of the sensor projector unit 82 is detected, and according to the movement quantity signal, the control unit 57 controls the image projection part 53 through the projection control unit 54, and controls the input detection unit 55 through the detection control unit 56. A motor driving switch not shown in the drawing is connected to the motor control unit 86, and when a user presses the motor driving switch, the sensor projector unit 82 can be moved to a user's desired position. The electric driving unit 58 is housed in a housing 84 of the input device 51, and the components other than the display unit 52 of the input device 51 are housed in the housing 84.

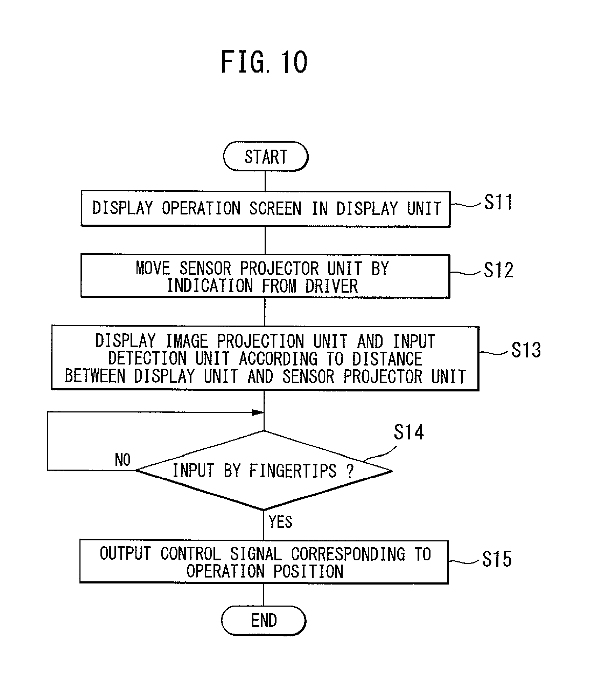

The following describes the operation of the input device 51 in the second embodiment of the present invention with reference to FIG. 10. First, the power to the input device 51 is turned on to display an operation screen in the display unit 52 (Step S11) . The power to the input device 51 is turned on, for example, by turning an engine key of the vehicle to an accessory position. Next, when the driver presses the motor driving switch, the control unit 57 moves the sensor projector unit 82 as long as the motor driving switch is pressed (Step S12) . The control unit 57 monitors a movement distance of the sensor projector unit 82 for the display unit 52, and according to the movement distance, changes a projection angle of the image projection part 53 and a detection position and range of the input detection unit 55 (Step S13). At this time, as in the first embodiment, the control unit 57 may expand display of the display unit 52 according to the distance between the display unit 52 and the input detection unit 55, or limit the distance between the display unit 52 and the input detection unit 55 according to the size of display in the display unit 52. Then, the control unit 57 monitors whether the driver's fingertips have entered the detection area SA of the input detection unit 55 (Step S14). On detecting that the fingertips have entered the detection area SA, the control unit 57 notifies the driver of the fact by a beep, and further on recognizing an operation position by the fingertips, notifies the driver of the fact by a different beep. When an operation position has been determined, the control unit 57 outputs a control signal corresponding to the operation position to the body control unit 60 (Step S15) , which turns on or off an audio device and the like mounted in the vehicle according to the control signal.

As described above, according to the second embodiment, the input device 51 includes: the display unit 52 having a screen on which images are displayed; the image projection unit 53 that projects an operation screen to the display unit 52; the projection control unit 54 that controls the projection of the image projection unit 53 according to a disposition angle of the display unit 52; the input detection unit 55 that is disposed to be movable back and forth in front of the display unit 52 and detects an operation position indicated for an operation screen displayed in the display unit 52; the detection control unit 56 that controls a detection position and range of the input detection unit 55 according to a disposition angle of the display unit 52; the control unit 57 that outputs a control signal corresponding to a detected operation position; and the electric driving unit 58 that integrally moves the image projection unit 53 and the input detection unit 55 back and forth as a sensor projector unit 82. By this construction, the input device can be constructed independently of an electronic apparatus body, and the driver can operate the electronic apparatus in an optimum position for the driver by changing the position of the input detection unit 55 to an operation position suitable to the driver.

Although, in the description of the above embodiments, the input detection unit, or the input detection unit and the image projection unit are moved by the electric driving unit, they may be manually moved with a slide structure. In the case where the number of options in the display unit is limited to about 2 to 4, it is unnecessary to perform the control of expanding display of the display unit according to the distance between the display unit and the input detection unit, or limiting the distance between the display unit and the input detection unit according to the size of display in the display unit.

As has been described above, the input device according to the present invention has the advantage that a user can change an operation position during operations on an operation screen displayed in the display unit at an operation position away from the operation screen and according to the user's physical conditions and seat positions. The input device is useful as a virtual input device or the like, and is applicable to various uses, as an input device for operating a screen at a position away from a monitor in vehicles such as automobiles, ships, and airplanes, and further as an input device to replace conventional remote controls at a position away from a television set in a home.

Although the present invention has been described based on the preferred embodiments shown in the drawings, it is apparent to those skilled in the art that the present invention may be modified in various ways without departing from the idea of the present invention. The present invention includes such modifications.

## Claims

1. An input device comprising:
a display unit in which images are displayed;
an input detection unit that is disposed to be movable back and forth in front of the display unit and detects an operation position indicated for an operation screen displayed in the display unit; and
a control unit that outputs a control signal corresponding to the detected operation position.

2. The input device according to claim 1, including an electric driving unit that moves the input detection unit back and forth.

3. The input device according to claim 1,
wherein the control unit controls the display of the display unit according to the distance between the display unit and the input detection unit.

4. The input device according to claim 1,
wherein the control unit controls the distance between the display unit and the input detection unit according to the size of display in the display unit.

5. The input device according to claim 1, including an image projection unit that projects images onto the display unit, and having a structure with the input detection unit and the image projection unit integrated.

6. The input device according to claim 5, including a projection control unit that controls the projection of the image projection unit according to a disposition angle of the display unit.

7. The input device according to claim 5, including a detection control unit that controls a detection area of the input detection unit according to a disposition angle of the display unit.

8. The input device according to claim 6,
wherein the display unit is a windshield of a vehicle.

9. The input device according to claim 7,
wherein the display unit is a windshield of a vehicle.

10. A vehicle including the input device according to any one of claims 1 to 8.
